# EUROPÄISCHE PATENTSCHRIFT

(11) **EP 3 317 130 B1**
(45) Veröffentlichungstag und Bekanntmachung des Hinweises auf die Patenterteilung: **16.06.2021**
(21) Anmeldenummer: 16757013.4
(22) Anmeldetag: 24.08.2016
(51) Int. Cl.: B60C 23/04

(54) **VERFAHREN ZUR ZUORDNUNG VON REIFENDRUCKKONTROLLVORRICHTUNGEN ZU RADPOSITIONEN EINES FAHRZEUGES**
METHOD FOR ALLOCATING TYRE PRESSURE CONTROL UNITS TO WHEEL POSITIONS OF A VEHICLE
PROCEDE DE DETERMINATION DES POSITIONS DE ROUES DES DISPOSITIFS DE CONTRÔLE DE PRESSION DE PNEUMATIQUE

(30) Priorität: 17.09.2015 DE 102015115731
(43) Veröffentlichungstag der Anmeldung: 09.05.2018
(73) Patentinhaber: Huf Baolong Electronics Bretten GmbH, 75015 Bretten (DE)
(72) Erfinder: ALEXANDER, Markus Adrian, 76287 Rheinstetten (DE)
(74) Vertreter: Zenz Patentanwälte Partnerschaft mbB
(86) Internationale Anmeldenummer: PCT/EP2016/069991
(87) Internationale Veröffentlichungsnummer: WO 2017/045886

(56) Entgegenhaltungen:
- WO-A1-2010/034703
- DE-A1- 10 342 297

## Beschreibung

Die Erfindung betrifft ein Verfahren zur Zuordnung von Reifendruckkontrollvorrichtungen zur Radpositionen eines Kraftfahrzeuges.

Reifendruckkontrollsysteme an Fahrzeugen sind verbreitet und werden bei Fahrzeugen zunehmend eingesetzt. Bei modernen, sogenannten direkten Systemen werden an jedem Rad des Fahrzeuges Reifendruckkontrollvorrichtungen angeordnet, welche den Reifendruck erfassen und die Druckinformation per Funk an eine Zentraleinheit eines Fahrzeuges übermitteln. Diese wertet die Reifendrücke aus und kann den Fahrzeugführer im Cockpit warnen, falls der Reifendruck zu gering ist. Die Reifendruckkontrollvorrichtungen an jedem Fahrzeugrad können in Reifen einvulkanisiert oder geklebt sein, sie können jedoch auch am Ventil oder an der Felge befestigt sein.

Da die Reifendruckkontrollvorrichtungen an einem Rad fixiert sind, sind sie auch zusammen mit dem Rad vom Fahrzeug zu entfernen, beispielsweise bei Reparaturarbeiten, saisonalem Reifenwechsel etc. Nachdem die Räder wieder am Fahrzeug montiert sind, ist sicher zu stellen, dass die Reifendruckinformationen auch bei einer vom vorherigen Zustand abweichender Montage, beispielsweise einem Wechsel der Räder von vorne nach hinten, die richtigen Drücke für die richtigen Radpositionen anzeigen. Die Zentraleinheit kann jedoch die Information der Montageposition eines Rades mit dessen Reifendruckkontrollvorrichtung nicht ohne weiteres aus den übermittelten Daten gewinnen. Im Stand der Technik sind verschiedene Verfahren bekannt, um eine Zuordnung in der fahrzeugseitigen Zentraleinheit automatisiert vorzunehmen.

Ein Verfahren zur Zuordnung der Reifendruckkontrollvorrichtungen und damit der Räder zu Positionen am Fahrzeug, ist beispielsweise aus der EP 1 052 119 A1 bekannt. Dieses System verfolgt das Konzept, Drehinformationen des Rades, die von der Reifendruckkontrollvorrichtung mit Hilfe eines Beschleunigungssensors erfasst werden und an die Zentraleinheit übermittelt werden, mit Informationen von fest am Fahrzeug angeordneten Drehwinkelsensoren zu korrelieren. Es findet also beispielsweise ein Abgleich des fest am Fahrzeug verbleibenden Antiblockiersystems (ABS) mit den Drehinformationen der am Rad angeordneten Reifendruckkontrollvorrichtungen statt. Da jedes Rad im Fahrbetrieb eines Fahrzeuges spezifisches Drehverhalten zeigt, kann nach einer gewissen Messdauer eine Korrelation mit den ABS-Daten vorgenommen werden und so kann eine Zuordnung erfolgen.

Solche Systeme sind abhängig von den Daten des Antiblockiersystems, welches als sicherheitsrelevantes System jedoch andere Prioritäten hat. Die ABS-Sensorwerte müssen durch eine zentrale Steuereinheit kontinuierlich beobachtet werden und müssen, je nach System, angepasst werden.

Das Dokument DE 10 342 297 A1 betrifft ein Verfahren und eine Einrichtung zur Ermittlung der Radposition von Rädern eines Kraftfahrzeuges. Dort wird vorgeschlagen, den jeweiligen Radwinkel von Reifendruckkontrollvorrichtungen bei der Auswertung der empfangenen Datensignale zu berücksichtigen. Dazu soll ein vom Radwinkel abhängiges Kompensationssignal sendeseitig oder empfängerseitig dem gesendeten Datensignal überlagert werden. Es wird auch vorgeschlagen, das Datensignal nur innerhalb eines relativ kleinen Winkelbereichs oder zu einer vorgegebenen Winkelposition des Radwinkels zu senden.

Das Dokument WO 2010 034 703 (A1) betrifft ein Verfahren, Sensor, Detektor und System, zur Lokalisierung zumindest eines Rades an einem Fahrzeug. Mehrere Sensoren ermitteln eine Radstellung und eine Winkellage des Rades und vergleichen die Phasenlage der Signale der Sensoren.

Aufgabe der Erfindung ist es, ein Zuordnungsverfahren für radmontierte Reifendruckkontrollvorrichtungen zu Radpositionen bereitzustellen, welches auch unabhängig von weiteren Fahrzeugsystemen funktioniert.

Diese Aufgabe wird erfindungsgemäß durch ein Verfahren mit den Merkmalen des Patentanspruches 1 gelöst.

Gemäß der Erfindung ist das Verfahren anwendbar bei Systemen, welche radmontierte Reifendruckkontrollvorrichtungen aufweisen und eine Zentraleinheit an dem Kraftfahrzeug aufweisen. Die Zentraleinheit an dem Kraftfahrzeug verfügt über eine Empfangseinheit. An mehreren Rädern des Kraftfahrzeugs ist jeweils eine Reifendruckkontrollvorrichtung angeordnet und jede der Reifendruckkontrollvorrichtungen hat wenigstens einen Lagesensor zur Ermittlung einer Drehwinkelinformation und eine Sendeeinrichtung für Funksignale sowie eine eingespeicherte, eindeutige Identifikationskennung. Jede Reifendruckkontrollvorrichtung kann mit ihrer Sendeeinrichtung Druckinformationen an die Empfangseinheit übermitteln. Diese Druckinformationen werden zusammen mit der Identifikationskennung der Reifendruckkontrollvorrichtung übermittelt, damit die Empfangseinheit eine Zuordnung vornehmen kann. Ein Lagesensor kann beispielsweise ein Beschleunigungssensor sein, welcher die Drehwinkelinformationen aus Beschleunigungsdaten ableiten kann. Entsprechende Baugruppen für Reifendruckkontrollvorrichtungen sind am Markt verfügbar und verfügen bereits über entsprechende Drucksensoren, Sendeeinrichtungen sowie Beschleunigungssensoren und Temperatursensoren (z. B. TPMS-Sensoren der Firma Infineon, wie z. B. die Baugruppe SP37).

Die Erfindung ist also mit herkömmlichen Reifendruckkontrollvorrichtungen einsetzbar.

Gemäß der Erfindung wird von den Reifendruckkontrollvorrichtungen jeweils deren Identifikationserkennung, zusammen mit Drehwinkelinformationen des zugeordneten Lagesensors derselben Reifendruckkontrollvorrichtung an die Zentraleinheit ausgesandt und die gesendete Information wird in der Zentraleinheit empfangen. In der Zentraleinheit wird außerdem ein Empfangspegel der Nachricht erfasst und gespeichert. Die Erfassung von Empfangspegeln ist bei üblichen Empfangssystemen vorgesehen und einfach zu realisieren (RSSI-Wert).

Liegen in der Zentraleinheit für eine Identifikationskennung ausreichend viele Werte für Drehwinkelinformationen und zugehörige Empfangspegel vor, werden diese Drehwinkelinformationen und Empfangspegel zu jeder Identifikationskennung mit gespeicherten Vergleichsdaten verglichen.

Die für den Vergleich herangezogenen Vergleichsdaten sind in der Zentraleinheit eingespeichert und stellen charakteristische Wertzuordnungen zwischen Drehwinkelinformationen und Empfangspegeln für jede Radposition am Fahrzeug dar (z.B. vorne links, vorne rechts, hinten links, hinten rechts). Wie weiter unten ausführlich beschrieben wird hat sich gezeigt, dass für jede Radposition der Signalpegelverlauf in Abhängigkeit von der Drehung des Rades unterschiedlich ist. Dies liegt an der Veränderung der Relativposition der empfangenden Zentraleinheit und deren Antenne zu der relativ bewegten Reifendruckkontrollvorrichtung am Fahrzeugrad und den unterschiedlichen Komponenten des Fahrzeuges auf dem Signalweg bei der Funkübertragung. Da die Geometrie und der Aufbau des Fahrzeuges nicht symmetrisch sind und auch keine symmetrischen Signalwege vorliegen, ist eine Unterscheidung anhand der Pegelinformationen jeder der Radstellungen möglich.

Über einen Umlauf von 360° ist der Empfangspegel mit einer Art Fingerabdruck vergleichbar, der für jede Radposition charakteristisch ist. Entsprechend wird das Verfahren ausgeführt, indem mehrere Signale von der Reifendruckkontrollvorrichtung mit jeweils zugeordneten Drehwinkelinformationen an die Empfangseinrichtung übermittelt werden. Diese Übermittlung kann über einen einzigen Umlauf oder zahlreiche Umläufe und bei zahlreichen verschiedenen Drehwinkelpositionen stattfinden. Je mehr Umläufe erfasst werden, desto genauer kann die Zuordnung vorgenommen werden.

Dabei kann eine Mindestanzahl von Wertepaaren als ausreichend angesehen werden oder es kann vorgesehen sein, dass für eine vorgegebene Anzahl von Winkelintervallen jeweils eine bestimmte Anzahl von Werten vorliegen muss. Zum Beispiel kann die Zentraleinheit so Lange Werte empfangen, bis zu jeder Identifikationskennung und zu jedem Winkelintervall für einen vollständigen Radumlauf mit einer Intervallbreite von z.B. 30° eine Empfangspegelinformation vorliegt. Auf diese Weise wird sichergestellt, dass die empfangenen Werte den Umlauf des zugeordneten Rades am Fahrzeug repräsentativ abbilden.

Die in der Zentraleinheit gespeicherten Vergleichsdaten können grundsätzlich bereits vor Einbau in das Fahrzeug dort gespeichert sein, wobei dann Vergleichsdaten für einen bestimmten Fahrzeugtyp einzuspeichern sind. Alternativ können die Vergleichsdaten bei einer einmaligen, anfänglichen Einmessen und Programmieren gespeichert werden, indem der Zentraleinheit einmalig mitgeteilt wird, welche Reifendruckkontrollvorrichtung an welchem Fahrzeugrad montiert ist und anhand dieser Informationen Vergleichsdaten beim Abrollen der Reifen eingemessen und gespeichert werden. Durch die Strukturen des Fahrzeuges werden die Signale von jeder Reifendruckkontrollvorrichtung in Abhängigkeit von der Drehlage des zugehörigen Rades unterschiedlich geschirmt oder abgelenkt. Diese Variation der Schirmung bei einem Umlauf ist charakteristisch für jede Radposition.

Es ist wesentlich, dass das Verfahren den Vergleich von gespeicherten Daten und aktuell erfassten Daten ausführt. Die absoluten Empfangspegel sind für das Verfahren weniger relevant. Wichtig ist die Variation der Empfangspegel über den Umlauf eines Rades. Entsprechend ist immer eine Mehrzahl von Empfangspegeln für unterschiedliche Radstellungen zu vergleichen.

Wesentlich ist, dass dieses Verfahren auf Vergleichsdaten der Einrichtung selbst zugreift, und nicht auf weitere Systeme des Fahrzeuges, z. B. das ABS-System angewiesen ist.

Der Vergleich an sich kann mit den üblichen Methoden der Signalvergleiche vorgenommen werden. Wesentlich ist, dass die Empfangsdaten für jede Identifikationskennung jeweils mit den gespeicherten Mustern verglichen werden und die Zuordnung der Reifendruckkontrollvorrichtungen mit deren Identifikationskennungen zu den Radpositionen anhand dieser Muster erfolgt. Bei einem Fahrzeug mit vier Radpositionen liegen also beispielsweise tabellarisch zu den Drehwinkeln von 0° bis 360° vier Spalten mit Empfangspegeln vor, welche jeweils einen Signalverlauf entlang der Drehwinkelskala darstellen. Zu jeder Radposition ist eine Reifendruckkontrollvorrichtung montiert, welche ihre Identifikationskennung zusammen mit Drehwinkelinformationen sendet und zu welchem die Empfangseinrichtung zu der jeweiligen Drehwinkelinformation einen Empfangspegel (empfangene Signalstärke) ermittelt. Anschließend erfolgt ein Abgleich mit den tabellarischen Vergleichswerten.

Bei diesem Vergleich kann beispielsweise ein Fit der gemessenen Daten auf die Musterdaten erfolgen oder eine sonstige Anpassung oder Verschiebung der Messdaten vorgenommen werden. Es ist nämlich durchaus möglich, dass durch Zeitverzögerungen ein gewisser Versatz zwischen Feststellung der Reifendrehwinkelposition in der Reifendruckkontrollvorrichtung und der Signalpegelfeststellung in der Zentraleinheit vorliegt. Eine Verschiebung entlang der Drehwinkelachse oder auch eine Skalierung und Normalisierung kann jedoch solche Probleme vermindern. Außerdem wird eine Zuordnung nicht in Abhängigkeit von einer vollständigen Übereinstimmung getroffen, sondern anhand der besten Zuordnung mit den geringsten Abweichungen der tatsächlich gemessenen Daten von den gespeicherten Vergleichsdaten.

Die Erfindung ist für jede Radanzahl einsetzbar. Dabei ist die Erfindung nicht nur zur Zuordnung der Positionen, sondern auch zu Identifikation der zum Fahrzeug gehörenden Reifendruckkontrollvorrichtungen einsetzbar. Es ist bekannt, dass es z.B. in Werkstattumgebungen oder in der Nähe mehrerer Fahrzeuge an der Zentraleinheit zum Empfang von fahrzeugfremden Daten am Fahrzeug kommen kann, welche durch die Reifendruckkontrollvorrichtungen anderer Fahrzeuge ausgesendet wurden. Durch den erfindungsgemäßen Vergleich ist es möglich, einerseits die zum Fahrzeug gehörenden Reifendruckkontrollvorrichtungen zu identifizieren und diese auch ihren Positionen zuzuordnen. Selbst bei einem Fahrzeug, bei dem nur ein Rad mit einer Reifendruckkontrollvorrichtung versehen ist, kann das Verfahren eingesetzt werden, um bei dem Empfang von Daten von mehreren Reifendruckkontrollvorrichtungen in der Zentraleinheit die am Fahrzeug verbaute Reifendruckkontrollvorrichtung zu identifizieren.

Das Verfahren bietet Vorteile gegenüber dem Stand der Technik, da keine hohe, komplexe und zeitkritische Vernetzung wie bei dem Abgleich mit fahrzeugseitigen Antiblockiersystem erforderlich ist. Ist eine solche Vernetzung jedoch ohnehin vorhanden oder werden auch andere Verfahren der Positionserkennung der Reifendruckkontrollvorrichtung angewandt, kann das erfindungsgemäße Verfahren mit großem Vorteil zusätzlich zu den anderen Verfahren, insbesondere zur Verkürzung der Erkennungszeit der Zuordnung eingesetzt werden.

In einer bevorzugten Gestaltung des erfindungsgemäßen Verfahrens sendet die Reifendruckkontrollvorrichtung während einer anfänglichen, z. B. von der Empfangseinrichtung getriggerten Einmessdauer eine Mehrzahl an Winkelstellungen in kurzer Folge an die Empfangseinrichtung. Es kann z. B. vorgesehen sein, dass die Reifendruckkontrollvorrichtungen an den einzelnen Rädern nacheinander von der Zentraleinheit am Fahrzeug getriggert werden, um dann jeweils eine Vielzahl von Winkelstellungen an die Zentraleinheit zu übermitteln. Alternativ können die Reifendruckkontrollvorrichtungen an den Rädern ohne Aufforderung der Zentraleinheit die entsprechenden Daten konkurrierend übermitteln.

Die Erfindung benötigt die fahrzeugseitigen Vergleiche mit den ABS-Sensoren nicht, da sie auf einen andere, von Radwechseln nicht beeinflussten und damit fahrzeugspezifischem Wert zurückgreift. Dieser Wert besteht in der Lage der Zentraleinrichtung am Fahrzeug und der Kenntnis von Unterschieden der Signalwerte von jeder der Reifendruckkontrollvorrichtungen zu dieser Zentraleinheit.

Die Erfindung wird nun anhand der beiliegenden Zeichnungen näher erläutert.
Figur 1 zeigt schematisch die Anordnung von Fahrzeugrädern mit Reifendruckkontrollvorrichtungen und einer Zentraleinheit am Fahrzeug;
Figuren 2a, 2b, 2c und 2d zeigen in der Zentraleinheit gespeicherte Vergleichsdaten für verschiedene Radpositionen;
Figur 2e zeigt eine Mehrzahl von Empfangspegeln, die bei verschiedenen Radwinkeln erfasst wurden;
Figuren 3a, 3b, 3c und 3d zeigen eine Anpassung der Empfangspegel aus Figur 2e an die gespeicherten Vergleichsdaten.

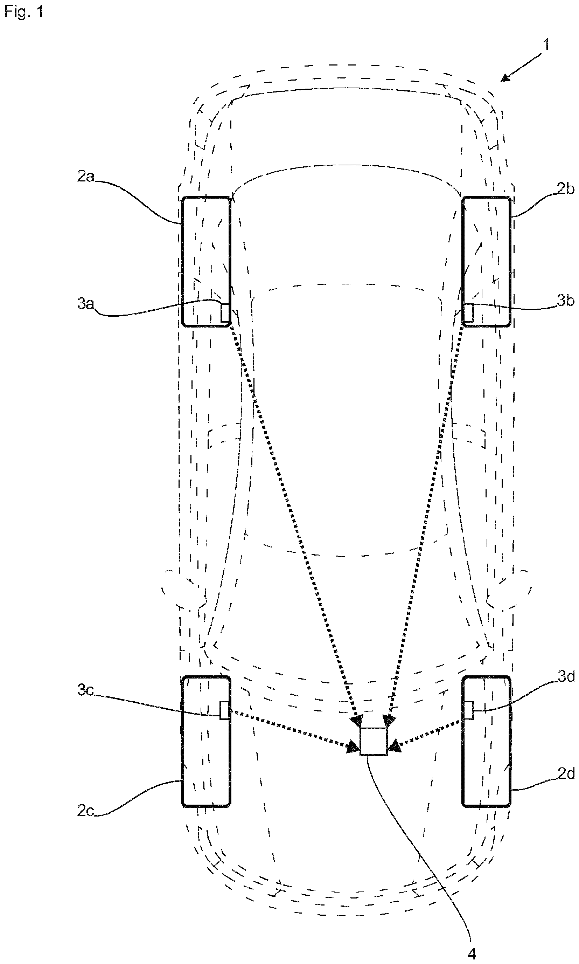

Figur 1 zeigt in durchbrochener Darstellung ein Fahrzeug 1, an dem Räder 2a, 2b, 2c, 2d angeordnet sind. Da in Figur 1 das Fahrzeug mit nach unten weisender Frontseite dargestellt ist, ist das Rad 2a an der Position hinten rechts (RR-rear right) montiert. Das Rad 2b nimmt die Position hinten links (rl - rear left) ein, das Rad 2c die Position vorne rechts (fr - front right), das Rad 2d hat schließlich die Position vorne links (fl - front left). An jedem der Räder ist jeweils eine Reifendruckkontrollvorrichtung angeordnet, am Rad 2a die Reifendruckkontrollvorrichtung 3a, am Rad 2b die Reifendruckkontrollvorrichtung 3b, am Rad 2c die Reifendruckkontrollvorrichtung 3c und am Rad 2d die Reifendruckkontrollvorrichtung 3d. An einer Einbauposition am Fahrzeug ist die zentrale Steuereinrichtung 4 angeordnet. Die zentrale Steuereinrichtung 4 kann Funksignale von den Reifendruckkontrollvorrichtungen 3a, 3b, 3c und 3d empfangen, was durch Pfeile in der Figur 1 dargestellt ist.

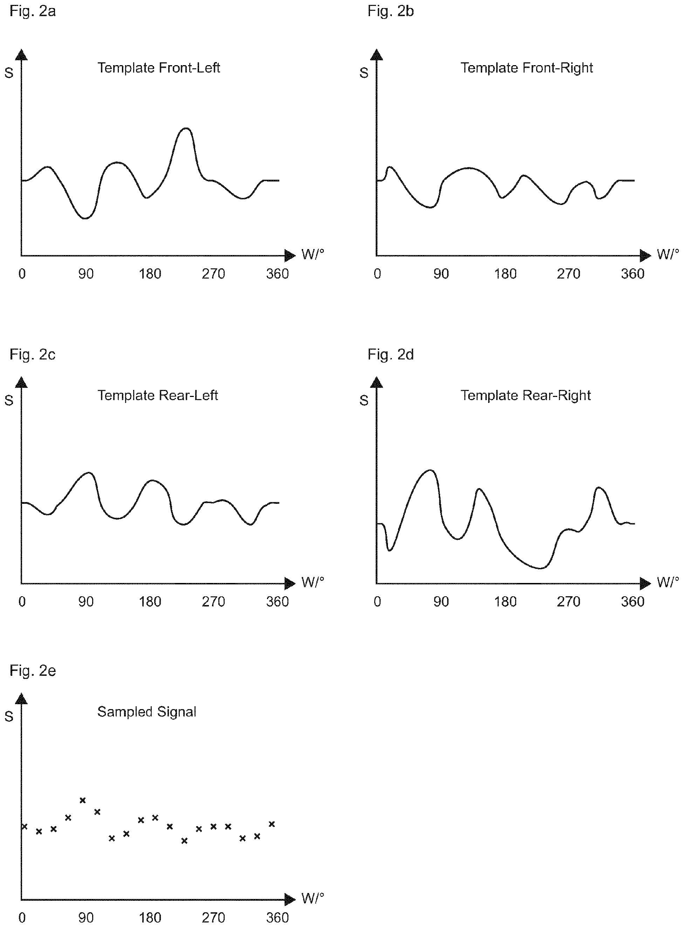

Die Figuren 2a, 2b, 2c und 2d zeigen Vorlagen (templates), welche für jede Radposition eine charakteristische Empfangssignalstärke oder einen Empfangspegel über verschiedene Dreierwinkel der Radpositionen zeigen. Die Vorlagen bilden den Verlauf der Empfangspegel über einen vollen Umlauf eines zugeordneten Rades ab.

Figur 2a zeigt einen beispielhaften Pegelverlauf über einen Umlauf von 360° für die Position vorne links, Figur 2b für vorne rechts, Figur 2c für hinten links und Figur 2d für hinten rechts. Die entsprechenden Daten werden in diesem Ausführungsbeispiel in der Zentraleinheit 4 für ein gegebenes Fahrzeugmodell programmiert und als Tabellenwerte gespeichert. Es kann auch vorgesehen sein, in anderen Ausführungsformen die Zentraleinheit 4 mit entsprechenden Vergleichsdaten einzulernen. Dazu werden dann beispielsweise bei langsamer Fahrweise die Signale der Reifendruckkontrollvorrichtungen über einen Umlauf des Rades gespeichert. In diesem Ausführungsbeispiel sind die Reifendruckkontrollvorrichtungen so programmiert, dass sie beim Fahrzeugstart und Erfassung einer Bewegung durch die eingebauten Lagesensoren eine Vielzahl an Signaltelegrammen an die Zentraleinheit 4 senden. Fährt das Fahrzeug also los, sendet jede der Reifendruckkontrollvorrichtungen 3a, 3b, 3c, 3d Datentelegramme, in welchen der aktuelle Drehwinkel und die Identifikation der Reifendruckkontrollvorrichtung enthalten sind. Zusätzlich können auch noch weitere Daten, wie beispielsweise der Reifendruck und die Reifentemperatur übermittelt werden. Diese Daten können jedoch auch in nur einer Untermenge der Telegramme enthalten sein, da die weiteren Telegramme nur der Zuordnung der Reifendruckkontrollvorrichtung zu einer Radposition dienen.

Die Zentraleinheit 4 empfängt die Datentelegramme und ermittelt zu jedem empfangenen Datentelegramm einen Empfangspegel, in diesem Beispiel einen RSSI-Wert, der von der Empfangseinrichtung der Zentraleinheit ausgegeben wird. Für jede Identifikationskennung wird eine Sammlung von Empfangspegeln und zugeordneten, in dem Datentelegramm enthaltenen Informationen des zugehörigen Drehwinkels gespeichert. Figur 2e zeigt ein beispielhafte Menge von gespeicherten Empfangspegeln zu den Drehwinkeln, die mit der jeweiligen Nachricht übermittelt wurden. Die Daten stammen von einer der Reifendruckkontrollvorrichtungen, wobei in diesem Beispiel zur besseren Verdeutlichung der Empfangspegel grafisch über dem hinzugehörigen Telegramm enthaltenen Drehwinkel aufgetragen ist. In der Zentraleinheit können die Werte tabellarisch abgelegt sein.

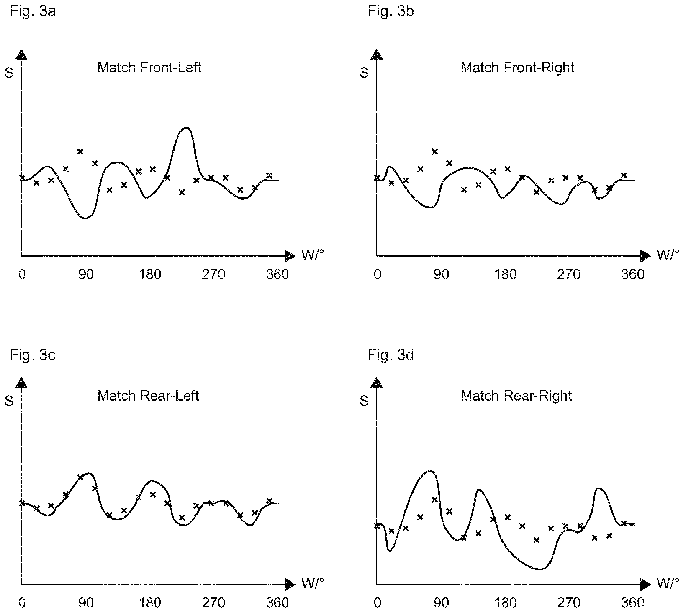

Eine entsprechende Wertemenge wird für jede der Reifendruckkontrollvorrichtungen, zumindest aber für mehrere empfangen. Liegen genügend Werte vor, wird ein Vergleich der empfangenen Signalpegel mit den gespeicherten Datenvorlagen (Figuren 2a bis 2d) durchgeführt. Die Figuren 3a, 3b, 3c und 3d zeigen exemplarisch den Abgleich der aus Empfangspegel generierten Daten der Figur 2e in Vergleich mit den gespeicherten Daten. In diesem Ausführungsbeispiel wird die Differenz zwischen den Empfangspegeln und den Vergleichsdaten für jede Winkelposition der empfangenen Daten gebildet und die Differenz quadriert. Die Summe der Abweichungsquadrate kann als Maß für die Übereinstimmung herangezogen werden (wobei eine kleine Summe eine bessere Übereinstimmung anzeigt).

Entsprechende Vergleichsoperationen erfolgen auch mit den Empfangspegeln und Winkelinformationen der weiteren Reifendruckkontrollvorrichtungen.

In dem gezeigten Vergleich der Figuren 3a bis 3d zeigt sich, dass die Summe der quadrierten Differenzen zwischen Vergleichswert und realen Messwerten in Figur 3c minimal wird und daher wird die zugehörige Identifikationskennung der Reifendruckkontrollvorrichtung der Position hinten links zugeordnet. Die weiteren Reifendruckkontrollvorrichtungen werden unabhängig auf Übereinstimmung geprüft und schließlich wird ermittelt, ob tatsächlich eine eindeutige oder aber überwiegend wahrscheinliche Zuordnung jeder Identifikationskennung zu einer Vergleichsvorlage vorgenommen werden kann.

Es ist ersichtlich, dass der Vergleich umso genauer wird, je mehr Wertepaare von Drehwinkeln und Empfangspegeln mit den gespeicherten Vergleichsdaten verglichen werden. Es ist jedoch im Rahmen der Erfindung auch möglich, bereits nach dem Empfang einer geringen Anzahl von Funktelegrammen einem ersten Abgleich durchzuführen, und nur dann auf weitere Daten zuzugreifen, wenn der Abgleich kein eindeutiges Ergebnis bringt.

Die Zentraleinheit greift ausschließlich auf gespeicherte Werte zurück, um eine Zuordnung der Reifendruckkontrollvorrichtungen zu den Radpositionen am Fahrzeug vorzunehmen. Ein Rückgriff auf weitere Sensordaten, beispielsweise eines ABS-Systems ist nicht erforderlich.

## Patentansprüche

1. Verfahren zur Zuordnung von radmontierten Reifendruckkontrollvorrichtungen (3a, 3b, 3c, 3d) zu Radpositionen eines Kraftfahrzeugs (1), wobei eine Zentraleinheit (4) an dem Kraftfahrzeug angeordnet ist, welche über mindestens eine Empfangseinheit verfügt, und wobei an mehreren Rädern (2a, 2b, 2c, 2d) des Kraftfahrzeugs jeweils eine Reifendruckkontrollvorrichtung (3a, 3b, 3c, 3d) angeordnet ist, wobei jede der Reifendruckkontrollvorrichtungen wenigstens einen Lagesensor zur Ermittlung einer Drehwinkelinformation und eine Sendeeinrichtung für Funksignale sowie eine eindeutige, gespeicherte Identifikationskennung aufweist,
mit den Schritten:
wiederholtes Aussenden der Identifikationskennung von den Reifendruckkontrollvorrichtungen (3a, 3b, 3c, 3d) durch die jeweils zugehörige Sendeeinrichtung zusammen mit wenigstens einer Drehwinkelinformation des jeweils zugehörigen Lagesensors, wobei mehrere Signale von den Reifendruckkontrollvorrichtungen bei mehreren verschiedenen Drehwinkelpositionen mit jeweils zugeordneten Drehwinkelinformationen an die Empfangseinrichtung übermittelt werden, wobei diese Übermittlung über mehrere Umläufe des Rades erfolgt,
Empfangen der Identifikationskennungen und der zugehörigen Drehwinkelinformationen in der Zentraleinheit (4), wobei jeweils ein Empfangspegel in der Zentraleinheit erfasst und gespeichert wird,
Vergleichen der empfangenen Drehwinkelinformationen und der zugehörigen erfassten Empfangspegel zu jeder Identifikationskennung mit gespeicherten Vergleichsdaten, wobei die Vergleichsdaten zu jeder Radposition charakteristische Wertezuordnungen zwischen Drehwinkelinformationen und Vergleichs-Empfangspegeln enthalten, und
Zuordnen jeder der Identifikationskennungen zu einer Radposition in Abhängigkeit von dem Vergleich.

2. Verfahren nach Anspruch 1, wobei als Vergleichsdaten gespeicherte Wertetabellen mit Wertepaaren aus Drehwinkel und Vergleichs-Empfangspegel verwendet werden.

3. Verfahren nach Anspruch 1 oder 2, wobei die Vergleichsdaten normalisiert vorliegen und die erfassten Empfangspegel vor dem Vergleich normalisiert werden.

4. Verfahren nach einem der vorangehenden Ansprüche, wobei von jeder Reifendruckkontrollvorrichtung eine Mehrzahl diskreter Datentelegramme mit jeweils einer Identifikationskennung und einer Drehwinkelinformation gesendet werden.

5. Verfahren nach einem der Ansprüche 1 bis 4, wobei von jeder Reifendruckkontrollvorrichtung und nach jedem Start des Verfahrens immer dann die Identifikationskennung und Drehwinkelinformation gesendet wird, wenn der Drehwinkel um wenigstens einen vorgegebenen Mindestwert von den vorherigen Drehwinkeln abweicht.

6. Verfahren nach einem der Ansprüche 1 bis 4, wobei der Vergleich für eine Reifendruckkontrollvorrichtung und zugehörige Identifikationskennung erst durchgeführt wird, wenn für jedes Winkelintervall der Intervallbreite 360/x des gesamten Drehwinkelbereichs von 0° bis 360° mindestens ein erfasster Empfangspegel vorliegt, wobei x ein Wert zwischen 5 und 120, besonders bevorzugt zwischen 12 und 60 ist.

7. Verfahren nach einem der Ansprüche 1 bis 6, wobei während des Vergleichs ein Fit der Vergleichs-Empfangspegel an die erfassten Empfangspegel berechnet wird.

8. Verfahren nach Anspruch 7, wobei während des Fits für jede Identifikationskennung ein Fit-Parameter als Drehwinkelverschiebung angepasst wird.

## Claims

1. Method for assigning wheel-mounted tire pressure monitoring devices (3a, 3b, 3c, 3d) to wheel positions of a motor vehicle (1), a central unit (4) being arranged on the motor vehicle and having at least one receiving unit, and a tire pressure monitoring device (3a, 3b, 3c, 3d) being arranged on each wheel of a plurality of wheels (2a, 2b, 2c, 2d) of the motor vehicle respectively, each of the tire pressure monitoring devices having at least one position sensor for determining rotational angle information and a transmitting device for radio signals and a unique, stored identification identifier,
comprising the steps of:
repeatedly transmitting the identification identifier from the tire pressure control devices (3a, 3b, 3c, 3d) by means of the respectively associated transmitting device together with at least one rotational angle information of the respectively associated position sensor, wherein a plurality of signals are transmitted from the tire pressure control devices at a plurality of different rotational angle positions with respectively associated rotational angle information to the receiving device, wherein this transmission takes place over a plurality of revolutions of the wheel,
receiving the identification identifiers and the associated rotation angle information in the central processing unit (4), a reception level being detected and stored in the central processing unit in each case,
comparing the received rotation angle information and the associated detected reception levels for each identification identifier with stored comparison data, the comparison data for each wheel position including characteristic value assignments between rotation angle information and comparison reception levels, and
associating each of the identification identifiers with a wheel position in response to the comparison.

2. Method of claim 1, wherein stored value tables containing pairs of values of rotation angle and comparison reception level are used as comparison data.

3. Method according to claim 1 or 2, wherein the comparison data are normalized, and the detected reception levels are normalized before the comparison.

4. Method according to any one of the preceding claims, wherein a plurality of discrete data telegrams each comprising an identification identifier and a rotation angle information are transmitted from each tire pressure monitoring device.

5. Method according to any one of claims 1 to 4, wherein from each tire pressure monitoring device and after each start of the method, the identification identifier and rotation angle information are sent whenever the rotation angle deviates from the previous rotation angles by at least a predetermined minimum value.

6. Method according to any one of claims 1 to 4, wherein the comparison for a tire pressure monitoring device and associated identification identifier is not performed until at least one detected received level is present for each angular interval of the interval width 360/x of the entire rotation angle range from 0° to 360°, where x is a value between 5 and 120, preferably between 12 and 60.

7. Method according to any one of claims 1 to 6, wherein during the comparison a fit of the comparison received levels to the detected received levels is calculated.

8. Method according to claim 7, wherein during the fit for each identification identifier a fit parameter is adjusted as a rotation angle shift.

## Revendications

1. Procédé d'attribution de dispositifs de contrôle de la pression des pneus (3a, 3b, 3c, 3d) montés sur les roues à des positions de roues d'un véhicule automobile (1), dans lequel une unité centrale (4) est disposée sur le véhicule automobile et présent au moins une unité de réception, et dans lequel un dispositif de contrôle de la pression des pneus (3a, 3b, 3c, 3d) est disposé sur chacune de plusieurs roues (2a, 2b, 2c, 2d) du véhicule automobile, chacun des dispositifs de contrôle de la pression des pneus comportant au moins un capteur de position pour déterminer une information d'angle de rotation et un dispositif d'émission de signaux radio ainsi qu'un code d'identification unique mémorisé,
avec les étapes:
Transmettre de manière répétée le code d'identification à partir des dispositifs de contrôle de la pression des pneus (3a, 3b, 3c, 3d) par le dispositif d'émission respectivement associé avec au moins une information d'angle de rotation du capteur de position respectivement associé, dans lequel une pluralité de signaux sont transmis à partir des dispositifs de contrôle de la pression des pneus à une pluralité de positions d'angle de rotation différentes avec des informations d'angle de rotation respectivement associées au dispositif de réception, dans lequel cette transmission a lieu sur une pluralité de tours de la roue,
Recevoir des codes d'identification et des informations d'angle de rotation associées dans l'unité centrale (4), dans laquelle un niveau de réception est détecté et stocké dans chaque cas,
Comparer les informations d'angle de rotation reçues et les niveaux reçus détectés associés pour chaque code d'identification avec des données de comparaison stockées, dans lesquelles les données de comparaison pour chaque position de roue comprennent des mappages de valeurs caractéristiques entre les informations d'angle de rotation et les niveaux reçus de comparaison, et
Affecter chacun des codes d'identification à une position de roue en fonction de la comparaison.

2. Procédé selon la revendication 1, dans lequel des tables de valeurs stockées avec des paires de valeurs d'angle de rotation et de niveau de réception de comparaison sont utilisées comme données de comparaison.

3. Procédé selon la revendication 1 ou 2, dans lequel les données de comparaison sont normalisées et les niveaux reçus détectés sont normalisés avant la comparaison.

4. Procédé selon l'une quelconque des revendications précédentes, dans lequel une pluralité de télégrammes de données discrets comprenant chacun un code d'identification et une information d'angle de rotation sont transmis à partir de chaque dispositif de contrôle de la pression des pneus.

5. Procédé selon l'une quelconque des revendications 1 à 4, dans lequel, à partir de chaque dispositif de contrôle de la pression des pneus et après chaque démarrage du procédé, le code d'identification et les informations d'angle de rotation sont envoyés chaque fois que l'angle de rotation s'écarte des angles de rotation précédents d'au moins une valeur minimale prédéterminée.

6. Procédé selon l'une quelconque des revendications 1 à 4, dans lequel la comparaison pour un dispositif de contrôle de la pression des pneus et un code d'identification associé n'est pas effectuée tant qu'au moins un niveau reçu détecté n'est pas présent pour chaque intervalle angulaire de la largeur d'intervalle 360/x de l'ensemble de la plage d'angles de rotation de 0° à 360°, où x est une valeur comprise entre 5 et 120, de manière particulièrement préférée entre 12 et 60.

7. Procédé selon l'une quelconque des revendications 1 à 6, dans lequel, pendant la comparaison, un ajustement des niveaux reçus de comparaison aux niveaux reçus détectés est calculé.

8. Procédé selon la revendication 7, dans lequel, pendant l'ajustement, un paramètre d'ajustement est ajusté comme un décalage d'angle de rotation pour chaque code d'identification.
